# EUROPEAN PATENT APPLICATION

(11) **EP 2 947 608 A1**
(43) Date of publication of application: **25.11.2015**
(21) Application number: 15167434.8
(22) Date of filing: 12.05.2015
(51) Int. Cl.: G06Q 10/04

(54) **SYSTEMS AND METHODS FOR PERSONALIZED MULTI-DESTINATION TRIP PLANNING**

(30) Priority: 19.05.2014 US 201414280897
(71) Applicant: Google Inc., Mountain View, CA 94043 (US)
(72) Inventor: Huyi, Charles Hua, Mountain View, CA California 94043 (US)
(74) Representative: Grant, David Michael

(57) **Abstract**

Systems and methods for personalized multi-destination trip planning are provided. One example system includes one or more processors and one or more non-transitory computer readable media storing instructions that cause the one or more processors to perform operations. The operations include receiving a routing request associated with a user. The routing request includes a list identifying a plurality of desired destinations. At least one of the plurality of desired destinations is a generalized location identifier. The operations include determining a plurality of specific destinations that satisfy the generalized location identifier. The operations include selecting, from the plurality of specific destinations, a recommended one of the specific destinations based at least in part on one or more attributes associated with the user. The operations include providing a personalized recommended route for display to the user. The personalized recommended route navigates among the plurality of desired destinations and the recommended specific destination.

## Description

### FIELD

The present disclosure relates generally to geographic information systems. In particular, the present disclosure is directed to systems and methods for providing personalized multi-destination trip planning.

### BACKGROUND

Geographic information systems, mapping applications, navigational devices and other similar and related products can allow a user to request and receive routing instructions between an origin and a destination. As an example, using a computing device in communication with the geographic information system over the Internet, a user can request directions from their current location to a desired destination, such as a sports arena. In response, the geographic information system can provide the user with a route from the user's current location to the sports arena. The geographic information system can also provide information describing a plurality of maneuvers required to follow the route, display a map of the route, etc.

However, certain existing geographic information systems do not provide the ability to request directions among a plurality of desired destinations. Further, for certain existing geographic information systems that do allow multi-destination routing requests, the user may be required to specify a particular ordering of the destinations. Thus, in such systems, the user cannot simply identify a plurality of desired destinations and request that the geographic information system provide an optimized ordering and associated route.

Another problem associated with certain existing geographic information systems is that they do not provide the ability for a user to input generalized location identifiers as a desired destination. For example, such existing systems may require identification of a particular address or particular point of interest in order to perform routing functionality. Thus, the user cannot simply identify a generalized location identifier (e.g. a type of location such as "sandwich shop") and request that the geographic information system provide routing options among various specific destinations that satisfy the generalized location identifier.

Furthermore, many existing geographic information systems do not personalize the searching process and corresponding results to the particular user who submitted the routing request. Therefore, such existing systems do not provide personalized recommendations that are tailored to the tastes and preferences of the specific user.

As an example, consider a user that is on vacation. She wishes to have dry cleaning services performed as well as purchase some groceries from a grocery store, but is unfamiliar with the surrounding area. Furthermore, while she does not have a particular dry cleaners in mind, she would prefer that it had a rating of at least four out of five stars.

In order to receive a route that minimizes the user's travel time while visiting destinations that meet her criteria, the user will be required to perform separate searches to respectively identify dry cleaners and grocery stores in the area that satisfy her desired criteria. The user must then manually select one or more specific destinations based on personal preferences. The user will then be required to perform several additional searches to identify which ordering of destinations and available routes provides the minimized travel time. The user will be required to manually compare and keep track of her options throughout such search process.

### SUMMARY

Aspects and advantages of the present disclosure will be set forth in part in the following description, or may be obvious from the description, or may be learned through practice of embodiments of the present disclosure.

According to a first embodiment, there is provided a computer implemented method for trip planning, the method comprising: receiving a routing request associated with a user, the routing request comprising a list identifying a plurality of desired destinations, at least one of the plurality of desired destinations being a generalized location identifier; determining a plurality of specific destinations that satisfy the generalized location identifier; selecting, from the plurality of specific destinations, a recommended one of the specific destinations based at least in part on one or more attributes associated with the user; providing a personalized recommended route for display to the user, the personalized recommended route navigating among the plurality of desired destinations and the recommended one of the specific destinations.

According to a second embodiment, there is provided a computer readable medium comprising computer executable instructions that when executed by a computer will cause the computer to carry out a method according to the first embodiment.

According to a third embodiment, there is provided a computer system comprising a computer readable medium according to the second embodiment and one or more processors for executing the computer executable instructions.

One embodiment is directed to a computing system that includes one or more processors and one or more non-transitory computer readable media storing instructions that, when executed by the one or more processors, cause the one or more processors to perform operations. The operations include receiving a routing request associated with a user. The routing request includes a list identifying a plurality of desired destinations. At least one of the plurality of desired destinations is a generalized location identifier. The operations include determining a plurality of specific destinations that satisfy the generalized location identifier. The operations include selecting, from the plurality of specific destinations, a recommended one of the specific destinations based at least in part on one or more attributes associated with the user. The operations include providing a personalized recommended route for display to the user. The personalized recommended route navigates among the plurality of desired destinations and the recommended one of the specific destinations.

According to another embodiment, there is provided a computer-implemented method for trip planning, the method comprising: receiving, by one or more computing devices, a routing request associated with a user, wherein the routing request identifies a plurality of desired destinations, at least one of the plurality of desired destinations being a category of points of interest, wherein each of the one or more computing devices comprises one or more processors; identifying, by the one or more computing devices, a plurality of points of interest that satisfy the category of points of interest; selecting, by the one or more computing devices, one of the plurality of points of interest based at least in part on one or more attributes associated with the user; determining, by the one or more computing devices, a plurality of routes navigating among the plurality of desired destinations and the selected point of interest, each of the plurality of routes visiting the plurality of desired destinations and the selected point of interest according to one of a plurality of different orderings; and providing, by the one or more computing devices, one of the plurality of routes as a personalized recommended route for display to the user.

In some embodiments, the selecting, by the one or more computing devices, one of the plurality of points of interest based at least in part on one or more attributes associated with the user comprises: determining a match score for each of the plurality of points of interest based at least in part on the one or more attributes associated with the user, wherein the match score for each point of interest provides an indication of a degree of matching between the point of interest being scored and the one or more attributes associated with the user; and selecting the one of the plurality of points of interest based at least in part on the plurality of match scores respectively determined for the plurality of specific destinations.

In some embodiments, providing, by the one or more computing devices, one of the plurality of routes as a personalized recommended route for display to the user comprises: determining a shortest route among the plurality of routes navigating among the plurality of desired destinations and the selected point of interest; and providing the shortest route as the personalized recommended route.

In some embodiments, each of the plurality of different orderings satisfies as least one ordering relationship provided by the user, wherein the ordering relationship defines relative ordering positions for two or more of the desired destinations.

According to another embodiment, there is provided a device comprising a processor and a memory, the device being configured to perform operations comprising:
receiving a routing request associated a user, wherein the routing request identifies a plurality of desired destinations, at least one of the plurality of desired destinations being a generalized destination; identifying a plurality of points of interest that satisfy the generalized destination;
determining a match score for each of the plurality of points of interest based at least in part on one or more attributes associated with the user, wherein the match score for each point of interest provides an indication of a degree of matching between the point of interest being scored and the one or more attributes associated with the user; identifying a plurality of routes that respectively visit the plurality of points of interest and the other desired destinations, wherein each of the plurality of routes has a length; and selecting one of the plurality of routes based at least in part on the length associated with each route and the match score associated with the point of interest visited by each route.

In some embodiments, selecting one of the plurality of routes based at least in part on the length associated with each route and the match score associated with the point of interest visited by each route comprises: determining a route score for each of the plurality of routes based at least in part on the length associated with the route being scored and the match score associated with the point of interest visited by the route being scored; and selecting one of the plurality of routes based at least in part on the plurality of route scores respectively determined for the plurality of routes.

In some embodiments, each route score is determined according to a route scoring formula, and wherein the route scoring formula applies a plurality of different weightings to a plurality of variables, the plurality of variables including at least the length associated with the route being scored and the match score associated with the point of interest visited by the route being scored.

These and other features, aspects and advantages of the present disclosure will become better understood with reference to the following description and appended claims. The accompanying drawings, which are incorporated in and constitute a part of this specification, illustrate embodiments of the present disclosure and, together with the description, serve to explain the principles of the present disclosure.

### BRIEF DESCRIPTION OF THE DRAWINGS

A full and enabling description of the present disclosure, directed to one of ordinary skill in the art, is set forth in the specification, which makes reference to the appended figures, in which:
FIG. 1 depicts an example mapping application providing personalized multi-destination trip planning according to an example embodiment of the present disclosure;
FIG. 2 depicts an example system according to an example embodiment of the present disclosure;
FIG. 3 depicts a flow chart of an example method for trip planning according to an example embodiment of the present disclosure; and
FIG. 4 depicts a flow chart of an example method for trip planning according to an example embodiment of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made to the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

### Overview

Generally, the present disclosure is directed to systems and methods for providing trip planning and navigational routing in response to a multi-destination routing request received from a user. In particular, the routing request can include a plurality of desired destinations, with at least one of the desired destinations being a generalized location identifier. In response to the routing request, a plurality of specific destinations that satisfy the generalized location identifier can be identified. A recommended one of the specific destinations can be selected based at least in part on one or more attributes associated with the user. A personalized recommended route that navigates among the plurality of desired destinations and the recommended one of the specific destinations can then be provided for display to the user. In such fashion, a user can be provided with a specific, personalized route in response to a multi-destination routing request that includes a generalized location identifier. In particular, the personalized route can visit a specific destination that satisfies the generalized location identifier and is recommended for the user based on one or more attributes of the user.

More particularly, a geographic information system or other mapping application can allow a user to input a request for navigational routing among a plurality of locations. The routing request can identify or otherwise list a plurality of desired destinations. In some embodiments, the user can indicate that the desired destinations included in the routing request are not required to be visited according to a particular ordering. In other embodiments, the absence of a required order of visits can be assumed. Thus, the user can provide a list of desired destinations and request that the geographic information system provide a route that optimizes various variables (e.g. time, distance travelled, etc.) without regard to a particular predetermined ordering. In other embodiments, certain desired destinations may be locked at certain positions or relationships (e.g. visit the soccer fields at any point prior to the car wash) and the remainder of the ordering may be left unspecified.

According to an aspect of the present disclosure, one or more of the desired destinations can be a generalized location identifier. As an example, the generalized location identifier can be a category or type of point of interest. Thus, in addition to one or more particular locations/addresses, the desired destinations can include one or more generalized location identifiers such as, for example, "grocery store," "Italian restaurant," or "dry cleaners."

In some embodiments, the routing request may also specify one or more criteria to be satisfied by one or more of the desired destinations. As an example, the criteria can include a minimum feedback rating based on feedback provided by other users. For example, the generalized location identifier may include a dry cleaners that scored 4 out of 5 stars or greater based on reviews provided by users of a review service.

As another example, the criteria may be a time-based criterion such as "open now." Alternatively, the routing request may specify a time at which the user plans to embark upon the trip. Therefore, the criteria may require that the desired destination be open at the specified time of embarkation or some period thereafter.

According to another aspect of the present disclosure, a plurality of specific destinations can be identified for each desired destination that includes a generalized location identifier. In particular, each of the plurality of specific destinations can satisfy the generalized location identifier and any other criteria associated with the generalized location identifier. As an example, in some embodiments, the routing request can specify an origin and/or a destination. In such embodiments, identifying the plurality of specific destinations can include identifying all points of interest that are within a threshold distance of the origin and/or the destination and which satisfy the generalized location identifier and any associated criteria. For example, map data or other available information can be searched to identify the points of interest.

As another example, identifying the plurality of specific destinations can include identifying all points of interest that satisfy the generalized location identifier and that are within a threshold distance from any of the desired destinations that are not generalized. Thus, the specific destinations can be identified by performing a localized search around the other non-generalized destinations.

As yet another example, identifying the plurality of specific destinations can include determining a preliminary route among the desired destinations that are not generalized. For example, the preliminary route can be a shortest route among the non-generalized desired destinations. Then, all points of interest that satisfy the generalized location identifier and that are within a threshold distance from the preliminary route can be identified.

One of the plurality of specific destinations can be selected as a recommended specific destination based at least in part on one or more attributes associated with the user. In some embodiments, selecting the recommended specific destination based on the user attributes can include determining a match score for each of the plurality of specific destinations based at least in part on the one or more attributes. The match score for each specific destination can provide an indication of a degree of matching between the specific destination being scored and the one or more attributes associated with the user. The recommended specific destination can then be selected based at least in part on the plurality of match scores respectively determined for the plurality of specific destinations. For example, the specific destination receiving the highest match score can be selected as the recommended specific destination.

As an example, the one or more attributes associated with the user can include one or more reviews provided by the user with respect to points of interest satisfying the generalized location identifier. For example, the user may have previously indicated via one or more reviews that she prefers upscale, specialty grocery stores offering gourmet items. Thus, in the instance that the user has provided a routing request including the generalized location identifier "grocery store," the resulting identified specific destinations can be selected from based on such previous reviews. In particular, as an example, identified grocery stores that offer specialty gourmet items may receive a higher match score while food marts, wholesalers, or discount stores may receive a lower match score.

As another example, the one or more attributes associated with the user can include one or more reviews provided by reviews provided by other users with respect to points of interest satisfying the generalized location identifier, where the other users are connections of the user on a social network. For example, if a certain grocer or type of grocer has received complimentary ratings from the user's social network, then a specific destination corresponding to such grocer may be selected as the recommended specific destination in lieu of a different grocer that has received no ratings or negative ratings from the user's social network.

As yet another example, the one or more attributes associated with the user can include a number and/or a frequency of visits by the user to one or more points of interest satisfying the generalized location identifier. For example, the number or frequency of visits to such points of interest can be obtained from a location history associated with the user.

More particularly, in some embodiments of the present disclosure, a plurality of location updates can be received from one or more mobile devices (e.g. a smartphone) associated with each of a plurality of users. The plurality of location updates can be used to build a location history for each of the users. The location history of each user can provide a history of visits by such user to points of interest over time.

Thus, in some embodiments, in order to obtain the benefits of the techniques described herein, the user may be required to allow the collection and analysis of location information associated with the user or her device or other information concerning attributes of the user. For example, in some embodiments, users may be provided with an opportunity to control whether programs or features collect such information. If the user does not allow collection and use of such signals, then the user may not receive the benefits of the techniques described herein. The user can also be provided with tools to revoke or modify consent. In addition, certain information or data can be treated in one or more ways before it is stored or used, so that personally identifiable information is removed.

The location history for the user can describe a number and/or frequency of visits by the user to one or more points of interest over time. By analyzing the location history of the user, the user's preferences for certain points of interest or types of points of interest can be identified and used as attributes for selecting a recommended specific destination. For example, if the user consistently visits upscale, specialty grocery stores offering gourmet items rather than wholesalers or discount stores, then the user's preference for specialty grocery stores can be identified.

According to another aspect of the present disclosure, a plurality of routes navigating among the plurality of desired destinations and the recommended specific destination can be determined. In particular, each of the plurality of routes can visit the desired destinations and the recommended specific destination according to one of a plurality of different orderings. For example, the plurality of different orderings can include all potential orderings in which the destinations can be visited.

In embodiments in which the user has provided one or more ordering relationships that define relative ordering positions for two or more of the desired destinations, then each of the plurality of different orderings can satisfy such ordering relationships.

One of the plurality of routes navigating among the plurality of desired destinations and the recommended specific destination can be selected and provided to the user as a personalized recommended route. For example, the route having the shortest travel time or shortest travel distance can be selected and provided to the user for display.

In some embodiments of the present disclosure, a particular specific destination is not selected prior to determining the plurality of candidate routes. In particular, in such embodiments, after identifying a plurality of specific destinations that satisfy the generalized location identifier, a plurality of routes that respectively visit such specific destinations and the other desired destinations can be identified. Thus, routes that visit several different specific destinations can be considered for selection as the personalized recommended route.

In particular, one of such routes can be selected based at least in part on a length associated with each route and a match score associated with the specific destination visited by each route. The length of the route can be a travel time or a travel distance. In such fashion, the degree to which each potential specific destination matches the user attributes can be balanced against the length of the route required to visit such specific destination.

As an example, a route score can be calculated for each of the plurality of routes. The route score can be determined according to a route scoring formula that applies different weightings to a plurality of variables. The variables can include the length associated with the route being scored and the match score associated with the specific destination visited by the route being scored. One of the routes can be selected as the personalized recommended route based on the route scores. For example, the route receiving the best route score can be selected as the personalized recommended route.

The personalized recommended route can be displayed to the user in a user interface of the geographic information system, mapping application, and/or navigational device. For example, the recommended route can be shown on a map or described by a series of textual steps or icons. Additional routing options may be provided for selection as well. In such fashion, a user can be provided with a specific, personalized route in response to a multi-destination routing request that includes a generalized location identifier. In particular, the personalized route can visit a specific destination that satisfies the generalized location identifier and is recommended for the user based on one or more attributes of the user.

With reference now to the FIGS., example embodiments of the present disclosure will be discussed in further detail.

### Example User Experience

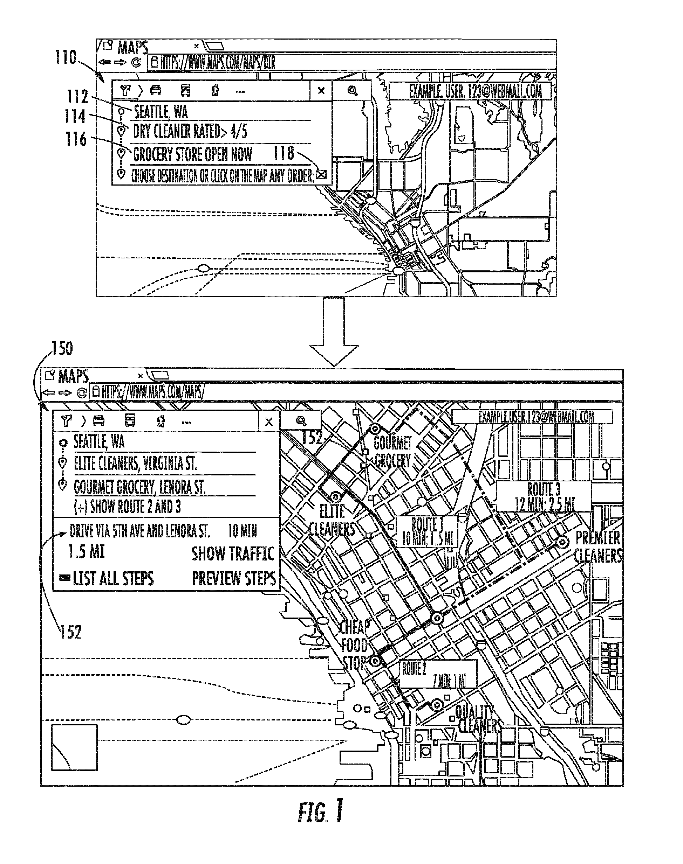

FIG. 1 depicts an example mapping application providing personalized multi-destination trip planning according to an example embodiment of the present disclosure. In particular, user interface 110 of the mapping application shows a user providing a list of desired destinations for a routing request. One or more of the desired destinations is a generalized location identifier. User interface 150 of the mapping application shows the resulting personalized recommended route provided by the user interface and also two alternative routes.

More particularly, user interface 110 shows features of the mapping application that allow the user to enter a multi-destination routing request. As shown in user interface 110, a plurality of text entry fields may be provided for the user to enter text describing various desired destinations.

As an example, the user has indicated in field 112 that they would like begin the trip at Seattle, WA. The user has also indicated in field 114 that she would like to visit a dry cleaner. Thus, the user has provided only a generalized location identifier "dry cleaner," rather than identify a particular location or specific point of interest. Generalized location identifiers can include categories of points of interest or other generalized ways of identify a grouping or subset of all existing points of interest.

The user has provided additional criteria in field 114 as well. In particular, the user has indicated that she would like to visit a dry cleaner only if the dry cleaner has been rated four out of 5 stars or greater. For example, the mapping application can also include or be in operative communication with a review platform that allows users to provide reviews of points of interest.

Furthermore, although the additional criteria depicted in field 114 entered as natural language in the same field 114 as the desired destination, in some embodiments additional fields, icons, drop down menus, or other modes of selection or information entry can be used to allow the user to enter one or more criteria for each desired destination.

The user has also indicated in field 116 that she would also like to visit a grocery store. The user has also entered additional criteria in field 116: the grocery store should be open now. Thus, the one or more criteria provided by the user can be quality criteria, time-based criteria, other suitable criteria such as price criteria or location criteria.

The user has also indicated by selecting button 118 that the resulting route may visit the desired destinations according to any order. In other embodiments, the absence of a required order of visits can be assumed. Thus, the user can provide a list of desired destinations and request that the geographic information system provide a route that optimizes various variables (e.g. time, distance travelled, etc.) without regard to a particular predetermined ordering. In other embodiments, certain desired destinations may be locked at certain positions or relationships (e.g. visit the soccer fields at any point prior to the car wash) and the remainder of the ordering may be left unspecified.

Further shown in user interface 110 is that the user has signed into an account associated with the user. Thus, by signing into her account, the user can provide access to data describing one or more attributes of herself so that the resulting recommended routes may be personalized to her preferences.

In response to the routing request depicted in user interface 110, the mapping application can determine and then provide and display the various routing options depicted in user interface 150. In particular, the mapping application has provided in user interface 150 a personalized recommended route 152. The personalized recommended route 152 first visits Elite Cleaners on Virginia St. and then visits Gourmet Grocery on Virginia St. Each of these specific destinations satisfies the generalized location identifies and criteria respectively provided in fields 114 and 116.

The mapping application has also provided in user interface 150 second and third alternative routes. The alternative routes may also satisfy the routing request including the desired destinations and associated criteria, but may be less favorable than the personalized recommended route 152 for various reasons (e.g. longer travel time or worse match with respect to the one or more attributes of the user). Any number of alternative routes, including zero, may be shown in various embodiments. Particular example systems and methods for determining the routes shown in user interface 152 will be discussed further below.

### Example Systems

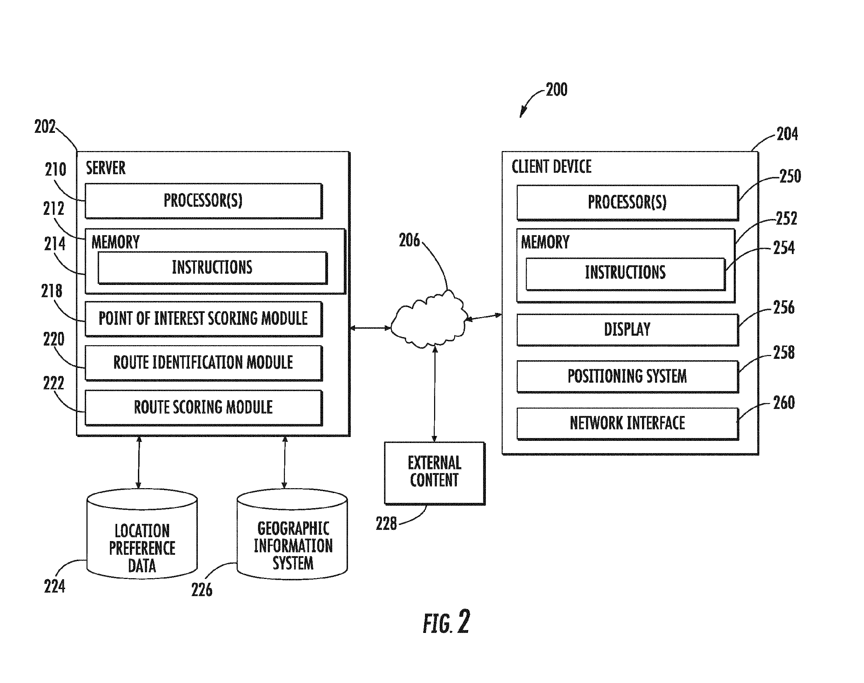

FIG. 2 depicts an example system 200 according to an example embodiment of the present disclosure. System 200 can include a client-server architecture, where a server 202 communicates with one or more client devices 204 over a network 206. Although a single client device 204 is illustrated in FIG. 2, any number of client devices can be connected to server 202 over network 206.

Server 202 can be implemented using one or more suitable computing devices. In the instance that server 202 is implemented using a plurality of computing devices, the functionality provided by server 202 can be performed according to any suitable computing architecture, including parallel computing architectures, sequential computing architectures, or some combination thereof.

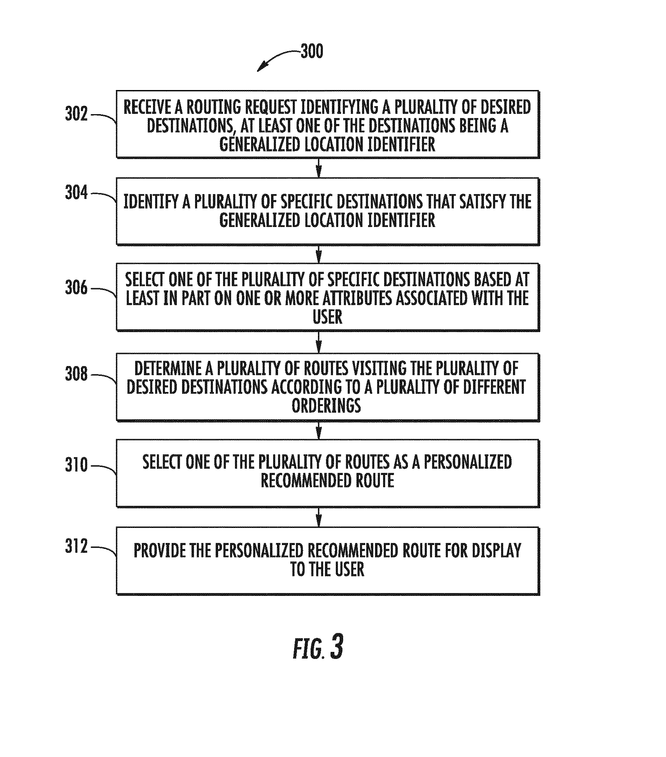

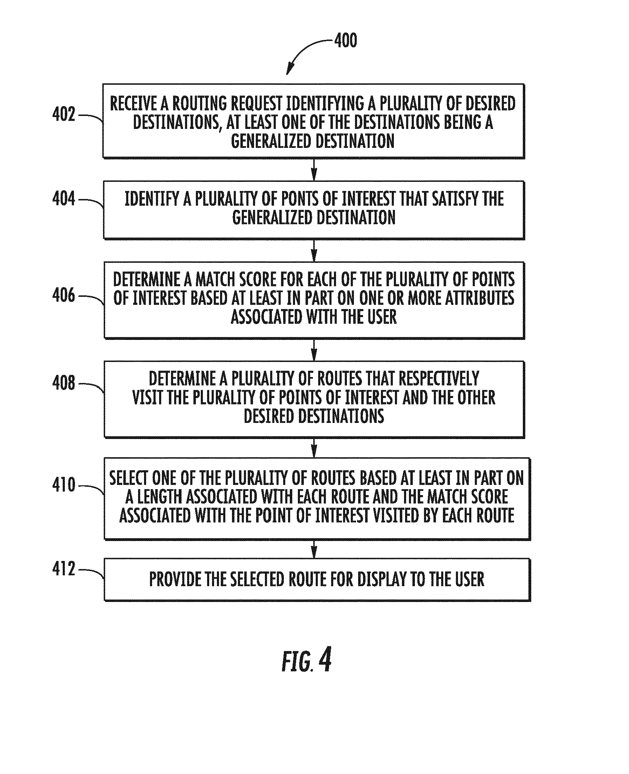

Server 202 can include one or more processors 212 and one or more memories 214. Processor 212 can be any suitable processing device and can be one processor or a plurality of processors which are operably connected. Memory 214 can store instructions 216 that cause processor 212 to perform operations to implement the present disclosure, including performing aspects of method (300) of FIG. 3 and method (400) of FIG. 4. Server 202 can communicate with client device 204 over network 206 by sending and receiving data.

Server 202 can also include various modules that, when implemented, cause server 202 to perform certain functionality. In particular, in some embodiments, server 202 can include a point of interest scoring module 218, a route identification module 220, and a route scoring module 222.

It will be appreciated that the term "module" refers to computer logic utilized to provide desired functionality. Thus, a module can be implemented in hardware, firmware and/or software controlling a general purpose processor. In one embodiment, the modules are program code files stored on the storage device, loaded into memory and executed by a processor or can be provided from computer program products, for example, computer executable instructions that are stored in a tangible computer-readable storage medium such as RAM hard disk or optical or magnetic media.

Server 202 can implement point of interest scoring module 218 to determine a match score for each of a plurality of points of interest. In particular, point of interest scoring module 218 can be implemented to determine the match score for each point of interest based on one or more attributes associated with a user. The match score determined for each point of interest can provide an indication of a degree of matching between the point of interest being scored and the one or more attributes associated with the user.

Server 202 can implement route identification module 220 to identify a plurality of routes. In particular, route identification module 220 can be implemented to identify a plurality of routes that visit various desired destinations according to a plurality of different orderings. In some embodiments, route identification module 220 can be configured to perform a graph search with respect to mapping or other geographic data that is represented a nodes and arcs of a graph, where the arcs represent transportation among respective locations represented by the nodes.

Server 202 can implement route scoring module 222 to determine a route score for each of a plurality of routes. In particular, in some embodiments, route scoring module 222 can be implemented to determine the route score for each route according to a route scoring formula that applies different weightings to a plurality of variables. The variables can include the length associated with the route being scored and one or more match scores respectively associated with one or more specific destinations visited by the route being scored.

Server 202 can also be coupled to or in communication with one or more databases, including a database providing location preference data 224, a geographic information system 226, and external content 228. Although databases 224, 226, and 228 are depicted in FIG. 2 as external to server 202, one or more of such databases can be included in memory 212 of server 202. Further, databases 224, 226, and 228 can each correspond to a plurality of databases rather than a single data source.

In some embodiments of the present disclosure, location preference database 224 can store or provide a plurality of location histories respectively associated with a plurality of users. In particular, when a user elects to participate and has signed into her user account into one of her computing devices, then such user computing device can periodically send a location update to server 202. Alternatively, the user location histories can be built and maintained by a computing system that is separate and unique from server 202 and the user location histories can simply be accessed by server 202.

For example, each location update can identify the presently active user account and a location (e.g. latitude and longitude) and a timestamp identifying the date and time of day. In some implementations, location updates can further include an accuracy indicator and/or other identifying information such as an originating IP address or a WiFi or cell tower identifier.

Thus, in some embodiments, in order to obtain the benefits of the techniques described herein, the user may be required to allow the collection and analysis of location information associated with the user or her device or other information concerning attributes of the user. For example, in some embodiments, users may be provided with an opportunity to control whether programs or features collect such information. If the user does not allow collection and use of such signals, then the user may not receive the benefits of the techniques described herein. The user can also be provided with tools to revoke or modify consent. In addition, certain information or data can be treated in one or more ways before it is stored or used, so that personally identifiable information is removed.

Additional information can be used to build or supplement a user location history as well. As an example, whenever a user is logged into a user account and performs a web search or uses one or more applications, such as a mapping application, it is possible that such interaction can result in obtaining the user's location. Therefore, an entry can be formed in the associated user location history based on such interaction. As another example, if a user provides consent, transaction data from a digital wallet can be used to identify locations visited by the user.

All received location updates can be stored and associated with a particular user so that a user location history is built over time. Furthermore, in the event that the location reports provided by the user computing device 204 simply provide a geo-location (e.g. a latitude and longitude), one or more algorithms or processes can be applied to such location data to identify a particular point of interest that the user likely visited. Thus, the user location history for each user can provide a history of visits by such user to points of interest over time.

In addition to the user location histories, location preference database 224 can also include information concerning additional attributes for each user. As an example, the additional attributes can include reviews provided by the user for particular points of interest. As another example, the one or more attributes associated with the user can include one or more reviews provided by other users with respect to points of interest satisfying the generalized location identifier, where the other users are connections of the user on a social network.

Location preference database 224 can store various other information concerning attributes of the user, as well. For example, in the instance in which the user consents to the use of such information, the user's home or work address or other attributes of the user that may be helpful in selecting a personalized location recommendation can be stored in database 224 and used to provide personalized routing options.

Geographic information system 226 can store or provide geospatial data to be used by server 202. Exemplary geospatial data includes geographic imagery (e.g., digital maps, satellite images, aerial photographs, street-level photographs, synthetic models, etc.), tables, vector data (e.g. vector representations of roads, parcels, buildings, etc.), point of interest data, or other suitable geospatial data. Geographic information system 226 can be used by server 202 to provide navigational directions, perform point of interest searches, provide point of interest location or categorization data, determine distances, routes, or travel times between locations, or any other suitable use or task required or beneficial for providing routes to a user according to the present disclosure.

Geographic information system 226 can include or receive data from data sources providing real-time data about current conditions that would affect travel times or other routing considerations. For example, the data sources can include sources of traffic data, weather data, traffic accident data, construction data, and/or detour data. Geographic information system 226 can also store or access information concerning historical travel times, historical traffic patterns, or other time-variant information.

Computer-based system 200 can further include external content 228. External content 228 can be any form of external content including news articles, webpages, video files, audio files, written descriptions, ratings, game content, social media content, photographs, commercial offers, or other suitable external content. Server system 202 and client device 204 can access external content 228 over network 206. External content 228 can be searched by server 202 according to known searching methods and can be ranked according to relevance, popularity, or other suitable attributes, including location-specific filtering or promotion.

Client device 204 can be a computing device having a processor 250 and a memory 252, such as a wireless mobile device, a personal digital assistant (PDA), smartphone, tablet, navigation system located in a vehicle, handheld GPS system, laptop computer, desktop computer, computing-enabled watch, computing-enabled eyeglasses, gaming console, embedded computing system, or other such devices/systems. In short, client device 204 can be any computer, device, or system that can interact with the server 202 (sending and receiving data) to implement the present disclosure.

Processor 250 of client device 204 can be any suitable processing device and can be one processor or a plurality of processors that are operably connected. Memory 252 can include instructions 254 that, when implemented by processor 250, cause client device 204 to perform operations to provide functionality. In some embodiments, memory 252 can include one or more application modules for implementing various applications at client device 204. For example, memory 252 can include a browser module for implementing a browser and/or a mapping application module for implementing a client device portion of a mapping application at the client device 204.

Client device 204 can include a display 256. Display 256 can be any component or grouping of components for displaying information, such as a recommended route.

Client device 204 can further include a positioning system 258. Positioning system 258 can determine a current geographic location of client device 204 and communicate such geographic location to server 202 over network 206. The positioning system 258 can be any device or circuitry for analyzing the position of the client device 204. For example, the positioning system 258 can determine actual or relative position by using a satellite navigation positioning system (e.g. a GPS system, a Galileo positioning system, the GLObal Navigation satellite system (GLONASS), the BeiDou Satellite Navigation and Positioning system), an inertial navigation system, a dead reckoning system, based on IP address, by using triangulation and/or proximity to cellular towers or WiFi hotspots, and/or other suitable techniques for determining position.

In the instance in which the user consents to the use of positional or location data, the positioning system 258 can analyze the position of the client device 204 as the user moves around in the world and provides the current location of client device 204 to the server 202 over network 206. The current location of client device 204 can be displayed on the map and can influence aspects of the present disclosure (e.g. can be used as a default origin for routing requests).

Client device 204 can further include a network interface 240. Network interface 240 can include any suitable components for interfacing with one more networks, including for example, transmitters, receivers, ports, controllers, antennas, or other suitable components.

Network 206 can be any type of communications network, such as a local area network (e.g., intranet), wide area network (e.g., Internet), or some combination thereof and can include any number of wired or wireless links. In general, communication between the server 202 and a client device 204 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

In addition, although system 200 of FIG. 2 employs a client-server architecture, it will be appreciate that system 200 is provided for the purposes of example only and is not necessarily required to practice the present disclosure. For example, the present disclosure can be implemented by a single computing device executing instructions from memory.

### Example Methods

FIG. 3 depicts a flow chart of an example method (300) for trip planning according to an example embodiment of the present disclosure. Although exemplary method (300) will be discussed with reference to system 200 of FIG. 2, method (300) can be implemented using any suitable computing system.

In addition, although FIG. 3 depicts steps performed in a particular order for purposes of illustration and discussion, methods of the present disclosure are not limited to such particular order or arrangement. One skilled in the art, using the disclosures provided herein, will appreciate that various steps of the method (300) can be omitted, rearranged, combined, and/or adapted in various ways without deviating from the scope of the present disclosure.

At (302) a routing request can be received. The routing request can identify a plurality of desired destinations. At least one of the desired destinations can be a generalized location identifier. For example, client device 204 can receive user input identifying a plurality of desired destinations and then transmit the routing request to server 202.

As an example, the generalized location identifier can be a category or type of point of interest. Thus, in addition to one or more particular locations/addresses, the desired destinations can include one or more generalized location identifiers such as, for example, "grocery store," "Italian restaurant," or "dry cleaners."

In some embodiments, the routing request may also specify one or more criteria to be satisfied by one or more of the desired destinations. As an example, the criteria can include a minimum feedback rating based on feedback provided by other users. For example, the generalized location identifier may include a dry cleaners that scored 4 out of 5 stars or greater based on reviews provided by users of a review service.

As another example, the criteria may be a time-based criterion such as "open now." Alternatively, the routing request may specify a time at which the user plans to embark upon the trip. Therefore, the criteria may require that the desired destination be open at the specified time of embarkation or some period thereafter.

At (304) a plurality of specific destinations that satisfy the generalized location identifier can be identified. For example, server 202 can interact with geographic information system 226 to identify the plurality of specific destinations.

In particular, each of the plurality of specific destinations can satisfy the generalized location identifier and any other criteria associated with the generalized location identifier. As an example, in some embodiments, the routing request can specify an origin and/or a destination. In such embodiments, identifying the plurality of specific destinations at (304) can include identifying all points of interest that are within a threshold distance of the origin and/or the destination and which satisfy the generalized location identifier and any associated criteria.

As another example, identifying the plurality of specific destinations at (304) can include identifying all points of interest that satisfy the generalized location identifier and that are within a threshold distance from any of the desired destinations that are not generalized. Thus, the specific destinations can be identified by performing a localized search around the other non-generalized destinations.

As yet another example, identifying the plurality of specific destinations a (304) can include determining a preliminary route among the desired destinations that are not generalized. For example, the preliminary route can be a shortest route among the non-generalized desired destinations. Then, all points of interest that satisfy the generalized location identifier and that are within a threshold distance from the preliminary route can be identified.

At (306) one of the plurality of specific destinations can be selected based at least in part on one or more attributes associated with the user. For example, server 202 can implement point of interest scoring module 218 to determine a match score for each of plurality of specific destinations and one of the specific destinations can be selected based on the match scores. For example, the specific destination receiving the highest match score can be selected as the recommended specific destination.

As an example, the one or more attributes considered at (306) can include one or more reviews provided by the user with respect to points of interest satisfying the generalized location identifier. For example, the user may have previously indicated via one or more reviews that she prefers upscale, specialty grocery stores offering gourmet items. Thus, in the instance that the user has provided a routing request including the generalized location identifier "grocery store," the resulting identified specific destinations can be selected from based on such previous reviews. In particular, as an example, identified grocery stores that offer specialty gourmet items may receive a higher match score while food marts, wholesalers, or discount stores may receive a lower match score.

As another example, the one or more attributes considered at (306) can include one or more reviews provided by reviews provided by other users with respect to points of interest satisfying the generalized location identifier, where the other users are connections of the user on a social network. For example, if a certain grocer or type of grocer has received complimentary ratings from the user's social network, then a specific destination corresponding to such grocer may be selected as the recommended specific destination in lieu of a different grocer that has received no ratings or negative ratings from the user's social network.

As yet another example, the one or more attributes considered at (306) can include a number and/or a frequency of visits by the user to one or more points of interest satisfying the generalized location identifier. For example, the number or frequency of visits to such points of interest can be obtained from a location history associated with the user. By analyzing the location history of the user, the user's preferences for certain points of interest or types of points of interest can be identified and used as attributes for selecting a recommended specific destination. For example, if the user consistently visits upscale, specialty grocery stores offering gourmet items rather than wholesalers or discount stores, then the user's preference for specialty grocery stores can be identified.

At (308) a plurality of routes visiting the plurality of desired destinations can be determined. The plurality of routes can visit the destinations according to a plurality of different orderings. For example, server 202 can implement route identification module 220 to determine the plurality of routes. The plurality of different orderings can include all potential orderings in which the destinations can be visited.

In embodiments in which the user has provided one or more ordering relationships that define relative ordering positions for two or more of the desired destinations, then each of the plurality of different orderings can satisfy such ordering relationships.

At (310) one of plurality of routes can be selected as a personalized recommended route. For example, the route having the shortest travel time or shortest travel distance can be selected as the personalized recommended route.

At (312) the personalized recommended route can be provided for display to the user. For example, server 202 can transmit information describing the personalized recommended route to client device 204. Client device 204 can provide the personalized recommended route and associated information in a user interface on display 256. For example, a user interface similar to user interface 150 of FIG. 1 can be used.

FIG. 4 depicts a flow chart of an example method (400) for trip planning according to an example embodiment of the present disclosure. Although exemplary method (300) will be discussed with reference to system 200 of FIG. 2, method (300) can be implemented using any suitable computing system.

In addition, although FIG. 4 depicts steps performed in a particular order for purposes of illustration and discussion, methods of the present disclosure are not limited to such particular order or arrangement. One skilled in the art, using the disclosures provided herein, will appreciate that various steps of the method (400) can be omitted, rearranged, combined, and/or adapted in various ways without deviating from the scope of the present disclosure.

At (402) a routing request can be received. The routing request can identify a plurality of desired destinations. At least one of the desired destinations can be a generalized destination. As an example, the routing request depicted in FIG. 1 includes two generalized destinations: a "dry cleaner" and a "grocery store."

At (404) a plurality of points of interest that satisfy the generalized destination can be identified. For example, server 202 can interact with geographic information system 226 to identify the plurality of points of interest.

At (406) a match score can be determined for each of the plurality of points of interest. The match score for each of the plurality of points of interest can be based at least in part on one or more attributes associated with the user. For example, server 202 can implement point of interest scoring module 218 to determine a match score for each of plurality of points of interest identified at (404).

At (408) a plurality of routes that respectively visit the plurality of points of interest and the other desired destinations can be determined. Each of the plurality of routes can have a length. For example, server 202 can implement route identification module 220 to determine the plurality of routes. The plurality of different orderings can include all potential orderings in which the destinations can be visited.

Thus, at least one route visiting each point of interest identified at (404) can be determined at (408). Further, in some embodiments, a plurality of different routes visiting each of such points of interest according to a plurality of different orderings can be determined. As such, for instances in which the routing request includes multiple generalized destination, a large number of routes visiting various identified candidate results according to different orderings can be determined at (408).

At (410) one of the plurality of routes can be selected based at least in part on the length associated with each route and the match score associated with the point of interest visited by each route. As an example, server 202 can implement route scoring module 22 to determine a route score for each route determined at (408).

More particularly, the route score can be determined for each route according to a route scoring formula that applies different weightings to a plurality of variables. The variables can include the length associated with the route being scored and the match score associated with the specific destination visited by the route being scored.

Use of a route scoring formula as described above can balance various variables (e.g. travel time/distance and the match score(s) of the point(s) of interest being visited) so that the recommended route is optimized over all of such variables.

As an example, with reference to user interface 150 of FIG. 1, it can be seen that route 152 which visits gourmet grocery was selected in favor of alternative route 2, which visits cheap food stop, even though route 152 has a longer travel distance and travel time than alternative route 2. Thus, because analysis of the user's preferences and attributes has indicated that she would greatly prefer a specialty grocery store to a food mart, route 152 can be selected in favor of alternative route 2, even though route 152 has a greater length than alternative route 2.

At (412) the selected route can be provided for display to the user. For example, server 202 can transmit information describing the personalized recommended route to client device 204. Client device 204 can provide the personalized recommended route and associated information in a user interface on display 256. For example, a user interface similar to user interface 150 of FIG. 1 can be used.

The technology discussed herein makes reference to servers, databases, software applications, and other computer-based systems, as well as actions taken and information sent to and from such systems. One of ordinary skill in the art will recognize that the inherent flexibility of computer-based systems allows for a great variety of possible configurations, combinations, and divisions of tasks and functionality between and among components. For instance, server processes discussed herein may be implemented using a single server or multiple servers working in combination. Databases and applications may be implemented on a single system or distributed across multiple systems. Distributed components may operate sequentially or in parallel.

Furthermore, computing tasks discussed herein as being performed at a server can instead be performed at a client device (e.g. navigational device communicating with a server). Likewise, computing tasks discussed herein as being performed at the client device can instead be performed at the server.

While the present subject matter has been described in detail with respect to specific example embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A computer implemented method for trip planning, the method comprising:
receiving a routing request associated with a user, the routing request comprising a list identifying a plurality of desired destinations, at least one of the plurality of desired destinations being a generalized location identifier;
determining a plurality of specific destinations that satisfy the generalized location identifier;
selecting, from the plurality of specific destinations, a recommended one of the specific destinations based at least in part on one or more attributes associated with the user;
providing a personalized recommended route for display to the user, the personalized recommended route navigating among the plurality of desired destinations and the recommended one of the specific destinations.

2. The method of claim 1, wherein:
the generalized location identifier comprises a category of destinations; and
determining the plurality of specific destinations that satisfy the generalized location identifier comprises identifying the plurality of specific destinations that satisfy the category of destinations.

3. The method of claim 1 or 2, wherein:
the routing request further specifies one or more criteria associated with the generalized location identifier; and
determining the plurality of specific destinations that satisfy the generalized location identifier comprises determining the plurality of specific destinations that satisfy the generalized location identifier and the one or more criteria.

4. The method of claim 3, wherein the one or more criteria comprise a minimum feedback rating, the feedback rating having been determined based on feedback provided by other users.

5. The method of claim 3, wherein the one or more criteria comprises a requirement that the generalized location identifier be open for business at a travel time.

6. The method of any one of the preceding claims, wherein determining the plurality of specific destinations that satisfy the generalized location identifier comprises identifying all points of interest that satisfy the generalized location identifier and that are within a threshold distance from any of the desired destinations that are not generalized.

7. The method of any one of the preceding claims, wherein determining the plurality of specific destinations that satisfy the generalized location identifier comprises:
determining a preliminary route among the desired destinations that are not generalized; and
identifying all points of interest that satisfy the generalized location identifier and that are within a threshold distance from the preliminary route.

8. The method of any one of the preceding claims, wherein selecting, from the plurality of specific destinations, the recommended one of the specific destinations based at least in part on the one or more attributes associated with the user comprises:
determining a match score for each of the plurality of specific destinations based at least in part on the one or more attributes associated with the user, wherein the match score for each specific destination provides an indication of a degree of matching between the specific destination being scored and the one or more attributes associated with the user; and
selecting the recommended one of the specific destinations based at least in part on the plurality of match scores respectively determined for the plurality of specific destinations.

9. The method of any one of the preceding claims, wherein the one or more attributes associated with the user comprise one or more reviews provided by the user with respect to points of interest satisfying the generalized location identifier.

10. The method of any one of the preceding claims, wherein the one or more attributes associated with the user comprise one or more reviews provided by other users with respect to points of interest satisfying the generalized location identifier, the other users being connections of the user on a social network.

11. The method of any one of the preceding claims, wherein the one or more attributes associated with the user comprise a number or a frequency of visits by the user to one or more points of interest satisfying the generalized location identifier, the number or the frequency of visits being obtained from a location history associated with the user.

12. The method of any one of the preceding claims, wherein providing the personalized recommended route comprises:
determining a plurality of routes navigating among the plurality of desired destinations and the recommended one of the specific destinations, each of the plurality of routes visiting the plurality of desired destinations and the recommended one of the specific destinations according to one of a plurality of different orderings; and
providing one of the plurality of routes as the personalized recommended route.

13. The method of claim 12, wherein providing one of the plurality of routes as the personalized recommended route comprises:
determining a shortest route among the plurality of routes navigating among the plurality of desired destinations and the recommended specific destination; and
providing the shortest route as the personalized recommended route.

14. A computer readable medium comprising computer executable instructions that when executed by a computer will cause the computer to carry out a method according to any one of the preceding claims.

15. A computer system comprising a computer readable medium according to claim 14 and one or more processors for executing the computer executable instructions.
